# EUROPEAN PATENT SPECIFICATION

(11) **EP 2 664 761 B1**
(45) Date of publication and mention of the grant of the patent: **12.08.2015**
(21) Application number: 13158231.4
(22) Date of filing: 07.03.2013
(51) Int. Cl.: F01N 13/14, B62J 23/00, F01N 1/08

(54) **Muffler unit for saddle-ride type vehicle**
Auspuffeinheit für ein Motorrad
Unité d'échappement pour véhicule avec selle

(30) Priority: 18.05.2012 JP 2012114427
(43) Date of publication of application: 20.11.2013
(73) Proprietor: Honda Motor Co., Ltd., Tokyo 107-8556 (JP)
(72) Inventor: SHIBUKI, Katsuaki, Wako-shi, Saitama 351-0193 (JP)
(74) Representative: Stevens, Jason Paul

(56) References cited:
- EP-A1- 2 532 854
- JP-A- 2001 303 925
- JP-A- 2005 344 552

## Description

The present invention relates to a muffler unit for a saddle-ride type vehicle.

A muffler unit for a saddle-ride type vehicle is known from Japanese Patent No. 4700586. This muffler unit includes a first protector covering an outer surface of a muffler body, and a second protector covering a lower part of the first protector from an outer lateral side. In this prior art, the first and second protectors are attached and fastened together to a bracket provided to the muffler body, and this enables a reduction in the number of fastening components. However, as the first and second protectors are fastened together, it is necessary to hold the first and second protectors when attaching them to the bracket of the muffler body, so that common fastening holes formed in the respective protectors are not displaced from their respective predetermined positions. This complicates the attachment work. Further, according to the prior art, it is also possible to group the first and second protectors into a unit with a grommet in advance before carrying out the work. However, the work for attaching the grommet is also carried out while the protectors are held so that the common fastening holes formed in the respective protectors are not displaced from their respective predetermined positions, and this deteriorates the work efficiency.

An alternative form of muffler unit, shown in EP 2532854, includes a first protector which is a heat insulation protector to be applied to a muffler body connected to an exhaust pipe extending from an internal combustion engine to cover an outer surface of the muffler body, and a second protector disposed on an outer surface of the first protector, the first and second protectors being attached and fastened together to the muffler body. The first protector is larger than the second protector, and has a first recessed portion into which a part of the second protector fits, such that an outer peripheral edge of the second protector is located in the first recessed portion while being adjacent to and spaced from an inner peripheral wall of the first recessed portion.

It is an object of at least the preferred embodiments of the present invention to provide a muffler unit which facilitates the work for attaching the first and second protectors to the muffler body.

According to a first aspect of the present invention, there is provided a muffler unit for a saddle-ride type vehicle, the muffler unit including: a first protector which is a heat insulation protector to be applied to a muffler body connected to an exhaust pipe extending from an internal combustion engine to cover an outer surface of the muffler body; and a second protector which is disposed on an outer surface of the first protector, the first protector and the second protector being attached and fastened together to the muffler body, characterized in that the first protector is formed larger than the second protector, and has a first recessed portion completely surrounding the second protector around the outer peripheral edge of the second protector, and in a state where the first protector and the second protector are attached to the muffler body, the second protector is disposed such that the outer peripheral edge of the second protector is located in the first recessed portion while being adjacent to an inner peripheral wall of the first recessed portion and spaced therefrom by a predetermined interval.

With this arrangement, it is possible to reduce the number of components by attaching and fastening the first protector and the second protector together to the muffler body. At the same time, the displacement of the second protector with respect to the first protector when the protectors are fastened together can be restricted by use of the inner peripheral wall of the first recessed portion of the first protector, making it easy to keep the first protector and the second protector in their predetermined positions. Thereby, the workability for attaching the first and second protectors to the muffler body can be improved.

In addition, when the first and second protectors are attached to the muffler body, the outer peripheral edge of the second protector is adjacent to the inner peripheral wall of the recessed portion of the first protector with a predetermined interval therebetween. This makes it possible to improve the unity of the first protector and the second protector, and thus to improve the appearance quality.

Preferably, fastening holes for fastening the protectors together to the muffler body are formed in the first and second protectors, the first and second protectors are attached to the muffler body by means of an elastic member inserted in the fastening holes, and a flange portion for clamping the first and second protectors is formed on the elastic member.

Thus, the first and second protectors can be grouped into a unit in advance, and so the protectors can be attached to the muffler body easily. Moreover, this makes it easy to keep the first and second protectors in their predetermined positional relation when attaching the elastic member to the fastening holes, so that the elastic member can also be attached easily.

Preferably, the second protector is disposed in such a manner that a space is formed between the outer surface of the first protector covering the outer surface of the muffler body and an inner surface of the second protector facing the outer surface of the first protector.

The provision of the space allows the heat insulation performance to be ensured and the heat-shielding effect to be enhanced.

Preferably, the protectors are formed along an outer peripheral surface of the muffler body, and the first recessed portion of the first protector is formed in such a manner that an angle formed between each of upper and lower parts of an inner peripheral wall of the first recessed portion and a bottom wall of the first recessed portion is an acute angle.

Thus, even when each of the first and second protectors has a shape curving along the outer peripheral surface of the muffler body, it is possible to clarify the positional relation between the first protector and the second protector, and to keep the protectors in their right positions easily.

Preferably, a second recessed portion is formed around the fastening hole of the first protector, the second recessed portion being further recessed from the bottom wall of the first recessed portion, and a third recessed portion is formed around the fastening hole of the second protector, the third recessed portion overlapping and being fitted in the second recessed portion.

This arrangement also makes it possible to clarify the positional relation between the first protector and the second protector and to keep the protectors in their right positions easily.

In a preferred form, a water drainage hole is formed in a vicinity of a lower part of at least the third recessed portion of the second recessed portion of the first protector and the third recessed portion of the second protector, the vicinity including an area that is located at a lowermost position in a state where the muffler unit is attached to a vehicle.

In the case where the third recessed portion is formed around the fastening hole, rainwater, dust, and the like from the outside are less likely to accumulate in the third recessed portion. Thus, the discharging efficiency can be improved and the appearance can be kept in a good condition.

Preferably, a water drainage hole is formed in a vicinity of a lower part of the first recessed portion of the first protector surrounding the second protector, the vicinity including an area that is located at a lowermost position in a state where the muffler unit is attached to a vehicle.

With this arrangement, in the case where the first recessed portion surrounding the second protector is formed in the first protector, rainwater and dust are less likely to accumulate in the first recessed portion. Thereby, the discharging efficiency can be improved.

Preferably, the first protector and the second protector are resin members, the fastening holes are formed in the protectors at front and rear ends thereof, and the fastening holes on at least one of the front and rear sides are formed in the shape of an elongated hole.

As a result, a dimension error between the protectors can be absorbed by the elongated hole. Accordingly, it is possible to fasten the first and second protectors together easily, and to dispose the second protector in the first recessed portion of the first protector easily.

In a preferred form, the fastening holes are formed in the protectors at one position at each of front and rear ends thereof, and the fastening holes on only one of the front and rear sides are formed in the shape of an elongated hole.

With this arrangement, by providing no more elongated holes than are necessary, it is possible to improve a condition where the second protector is fitted in the first protector after the protectors are attached to the muffler body. Thereby, the appearance quality can be improved.

Preferably, the second protector is disposed such that the first recessed portion of the first protector surrounding the second protector and the outer peripheral edge of the second protector are out of contact with each other.

Thus, it is possible to improve the efficiency of discharging rainwater and dust which enter the gap between the outer surface of the first protector and the inner surface of the second protector from the outside. This arrangement also makes the first recessed portion of the first protector and the outer peripheral rim of the second protector less likely to interfere with each other when the internal combustion engine vibrates, for example.

Preferably, the second protector is made of a light-transmissive resin, and colouring paint is applied only to the inner surface of the second protector facing the outer surface of the first protector.

With this arrangement, colouring paint is not applied to a surface of the second protector which is exposed to the outside, and so it is possible to protect the painted surface of the second protector against external factors such as bounced stones, and thereby to keep the appearance in a good condition. Further, because the space is formed between the inner surface of the second protector to which colouring paint is applied and the outer surface of the first protector it is possible to keep the painted surface away from the influence of heat through the first protector which is close to the muffler body, and thus o reduce the deterioration of the paint.

Preferably, the muffler body comprises: partition walls which partition the inside of the muffler body into a plurality of expansion chambers; an introduction pipe and communication pipes which are supported by the partition walls and connected to the exhaust pipe; and a protector mount bracket which is welded to the outer surface of the muffler body, a welded portion of the protector mount bracket is located at a position spaced from the partition walls in a longitudinal direction, the welded portion being welded to the muffler body, and a position where the protectors are fastened is located at a position spaced from the welded portion in the longitudinal direction.

With this arrangement, the protector mount bracket is welded at a position away from the partition walls, which are likely to reach a high temperature due to heat transfer, and the protector fastening position is located away from the welded position as well. This makes it possible to reduce an influence of heat on the protectors which is transferred through the fastening member.

Preferred embodiments of the invention will now be described by way of example only and with reference to the accompanying drawings, in which:
Fig. 1 is a right side view of a rear portion of a saddle-ride type vehicle with a muffler unit according to an embodiment of the present invention;
Fig. 2 is an exploded perspective view of the muffler unit of the vehicle;
Figs. 3(a) to 3(c) are a plan view and cross-sectional views of the muffler unit;
Fig. 4 is an enlarged view of the muffler unit and its periphery in the rear portion of the vehicle shown in Fig. 1;
Fig. 5 is a cross-sectional view of the muffler unit and its periphery in the rear portion taken along the line V-V of Fig. 4;
Fig. 6 is a cross-sectional view of the muffler unit and its periphery taken along the line VI-VI of Fig. 4;
Figs. 7(a) to 7(c) are a right side view and cross-sectional views of a first protector;
Figs. 8(a) to 8(c) are a right side view and cross-sectional views of a second protector; and
Figs. 9(a) to 9(c) are a right side view and cross-sectional views of a first protector according to a second embodiment.

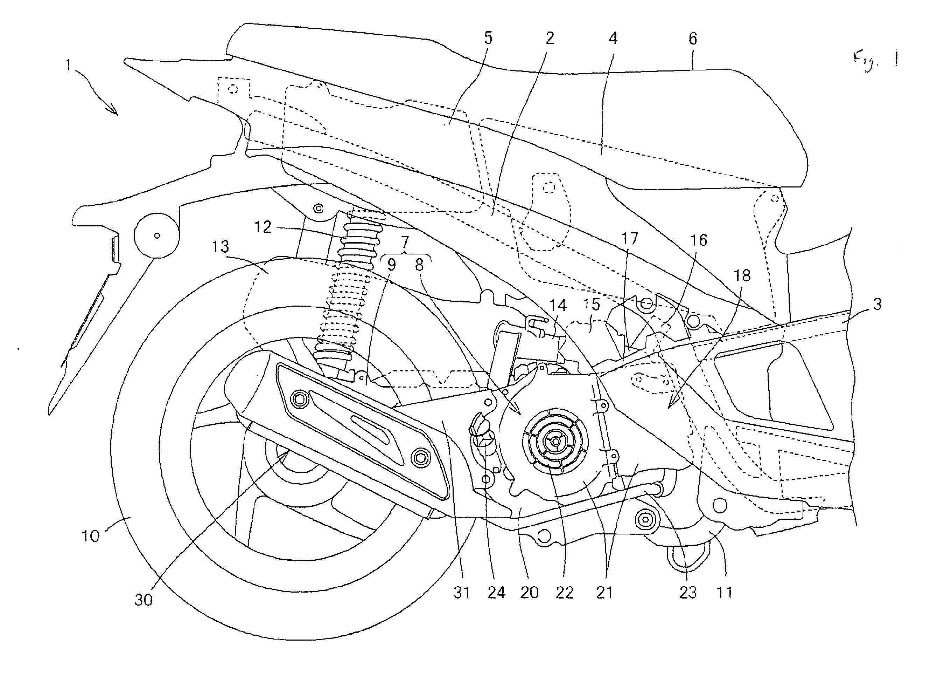

Fig. 1 is a right side view of a rear portion of a motorcycle 1 with a muffler unit according to an embodiment of the present invention. The frame of this vehicle includes: a head pipe that steerably supports a front fork pivotally supporting a front wheel (not shown), a main frame 2 branching into two from the head pipe, which extends sequentially downward, rearward, and then inclined rearward and upward at its rear end; and a sub-frame 3 extending from the head pipe to the portion of the main frame 2 which is inclined rearward and upward. The main frame 2 supports a storage portion 4 (which may be used to house a helmet), a fuel tank 5, and a rider's seat 6 in its upper portion.

A power unit 7 of the motorcycle 1 is of a type which integrally includes an internal combustion engine 8 and a transmission system 9. The internal combustion engine 8 is a forced air-cooled single-cylinder engine, and is located laterally at the centre of the vehicle. The transmission system 9 includes a V-belt continuously variable transmission and a reduction gear mechanism. The transmission system 9 is connected to the left side of the internal combustion engine 8, and extends rearwardly on the left side of the vehicle 1. A rear wheel 10 of the vehicle 1 is coupled to a rotary shaft located in a rearmost portion of the transmission system 9. The power unit 7 is swingably supported by the main frame 2 of the vehicle 1 through a link 11. A rear shock absorber 12 is installed between a rear portion of the transmission system 9 and the main frame 2. An air cleaner 13 is provided above the transmission system 9 and to the left of the rear wheel. A throttle body 15 is connected to the air cleaner 13 through an air cleaner connection tube 14, and is connected to a cylinder portion 18 of the internal combustion engine 8 through an intake pipe 17 equipped with a fuel injector 16.

Fig. 1 shows the internal combustion engine 8 and a muffler unit 30. An air intake 22 is provided at the centre of a shroud 21 located at the right of a crankcase 20 of the internal combustion engine 8. External air is sucked in by a fan installed inside the shroud 21, and is sent to the inside of the shroud 21 surrounding the cylinder portion 18, whereby the cylinder portion 18 is cooled. An exhaust pipe 23 extends downward from the cylinder portion 18 of the internal combustion engine 8, bends rearward, and is then connected to the muffler unit 30. The muffler unit 30 is connected to and supported by a rear portion of the crankcase 20 through a muffler supporting member 31. The muffler unit 30 swings together with the power unit 7. The head of an oil level gauge 24 inserted in the crankcase 20 can be seen at the rear portion of the crankcase 20, and in front of the muffler supporting member 31.

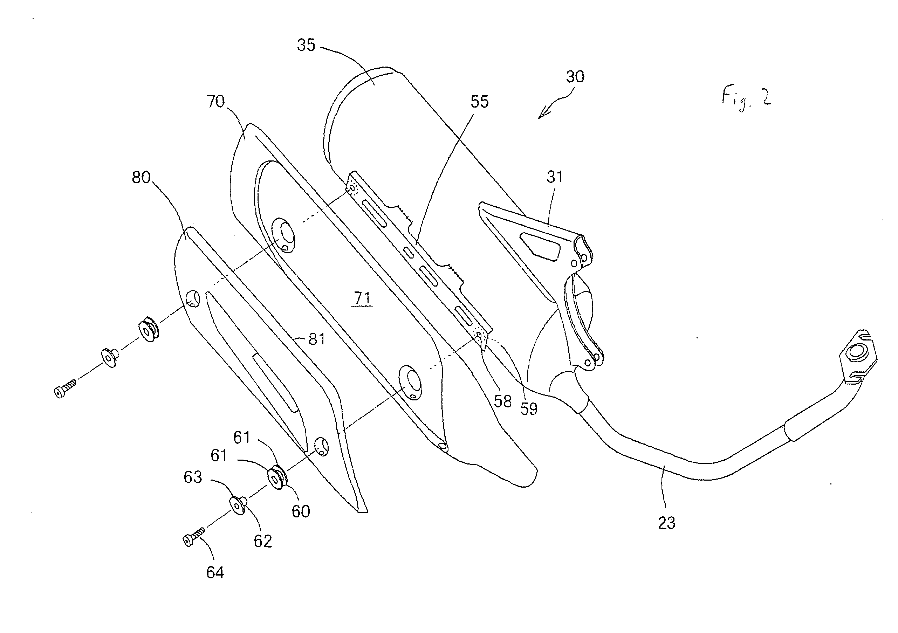

Fig. 2 is an exploded perspective view of the muffler unit 30. The muffler unit 30 includes: a muffler body 35; the muffler supporting member 31, which is welded to a front upper portion of the muffler body 35; a protector mount bracket 55, which is welded to a side surface of the muffler body; and first and second protectors 70, 80, which are attached to the bracket. The muffler unit 30 also includes, as parts for fastening these protectors: grommets 60; collars 62; fastening bolts 64; and weld nuts 59. Each fastening bolt 64 is screwed and fastened to the corresponding weld nut 59, which is welded to a rear surface of a protector mount hole 58 of the bracket 55. The exhaust pipe 23 is connected to a front portion of the muffler body 35. The muffler body 35 can reach a high temperature, and the protectors 70, 80 are used to prevent the high temperature of the muffler body 35 from affecting the legs of a rider.

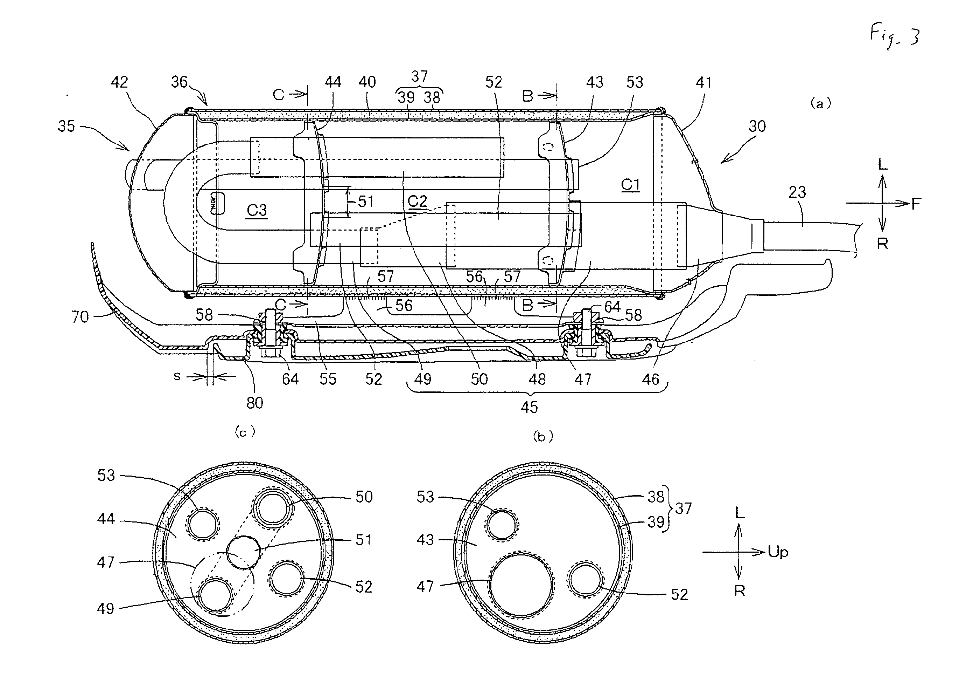

Figs. 3(a) to 3(c) are views of the muffler unit 30. Fig. 3(a) is a sectional plan view, and shows the muffler unit with an upper half of a casing 36 removed, so that the inside of the muffler unit can be seen. Fig. 3(b) is a cross-sectional view of the muffler unit 30 taken along the line B-B of Fig. 3(a), and Fig. 3(c) is a cross-sectional view of the muffler unit 30 taken along the line C-C of Fig. 3(a). In Fig. 3(a), the front, left, and right directions (relative to the motorcycle in normal use) are indicated by the arrows F, L, R. In Figs. 3(b) and 3(c), the up, left, and right directions (again relative to the motorcycle in normal use) are indicated by the arrows Up, L, R.

As shown in Figs. 3(a) to 3(c), the muffler unit 30 is mainly formed of the muffler body 35 and the two protectors 70 and 80. A cylindrical portion 37 of the casing 36 has a dual structure, and is formed of an outer cylindrical portion 38 and an inner cylindrical portion 39. A space between the outer and inner portions 38, 39 is filled with glass wool 40 as an acoustic absorbent. A generally conical front cap 41 is welded to the front end of the cylindrical portion 37, and a rear cap 42 in the form of a partial sphere is welded to the rear end of the cylindrical portion 37. The inside of the muffler body 35 is partitioned into three expansion chambers by means of a front partition wall 43 and a rear partition wall 44, and these chambers are referred to as a first chamber C1, a second chamber C2, and a third chamber C3 in the order from the front.

An introduction pipe 45 is provided, and passes through a tip portion of the front cap 41 of the muffler body 35. The introduction pipe 45 includes: a front connection pipe 46; a large-diameter catalyst housing pipe 47; a rear connection pipe 48; a curved pipe 49; and a straight pipe 50. The front connection pipe 46 projects forward from the front cap 41, and is connected to the exhaust pipe 23 which extends from the cylinder portion 18 of the internal combustion engine 8. Exhaust gas passes through the front connection pipe 46 into the catalyst housing pipe 47, and is then introduced to the second chamber C2 through the rear connection pipe 48, the curved pipe 49, and the straight pipe 50. The introduction pipe 45 extends through the first to third chambers C1 to C3 and opens into the second chamber C2. Hazardous materials are absorbed and removed from the exhaust gas when the gas passes through the catalyst housing pipe 47.

The exhaust gas discharged to the second chamber C2 is then discharged into the third chamber C3 via a through-hole 51 provided in a central portion of the rear partition wall 44. The exhaust gas discharged to the third chamber C3 thereafter passes through a first communication pipe 52, which extends through the rear partition wall 44 and the front partition wall 43, and thus enters the first chamber C1. The exhaust gas sent to the first chamber C1 then passes through a second communication pipe 53, which extends through the front and rear partition walls 43 and 44 and the rear cap 42, and is discharged to the external air. Exhaust noise is attenuated in the process in which the exhaust gas expands and contracts while passing the above path.

As shown in Fig. 3(a), the protectors 70, 80 are attached to a right side portion of the muffler body 35 by means of the protector mount bracket 55. The bracket 55 is made by bending a sheet of metal, and has legs 56 which are welded to the muffler body 35. The protector formed of the first and second protectors 70, 80 is attached to front and rear end portions of the bracket 55 with the fastening bolts 64.

The front and rear partition walls 43, 44 can reach high temperatures due to heat transfer from the introduction pipe 45 and the communication pipes 52, 53. The parts of the cylindrical portion 37 of the muffler body 35 which are in contact with these partition walls 43, 44 can also reach high temperatures. In order to prevent as much as possible this high temperature from being transferred to the protectors 70, 80 through the bracket 55 and the fastening bolts 64, the longitudinal positions of the partition walls 43, 44 and the positions of welded portions 57 of the bracket 55 are kept separate from each other. Moreover, the longitudinal positions of the welded portions 57 and the positions of the front and rear protector mount holes 58 of the mount bracket 55 are also kept separate from each other. Thus, an increase in the temperature of the protectors 70, 80 is prevented by an air-cooling effect brought about by the large distance across which heat is transferred between these parts.

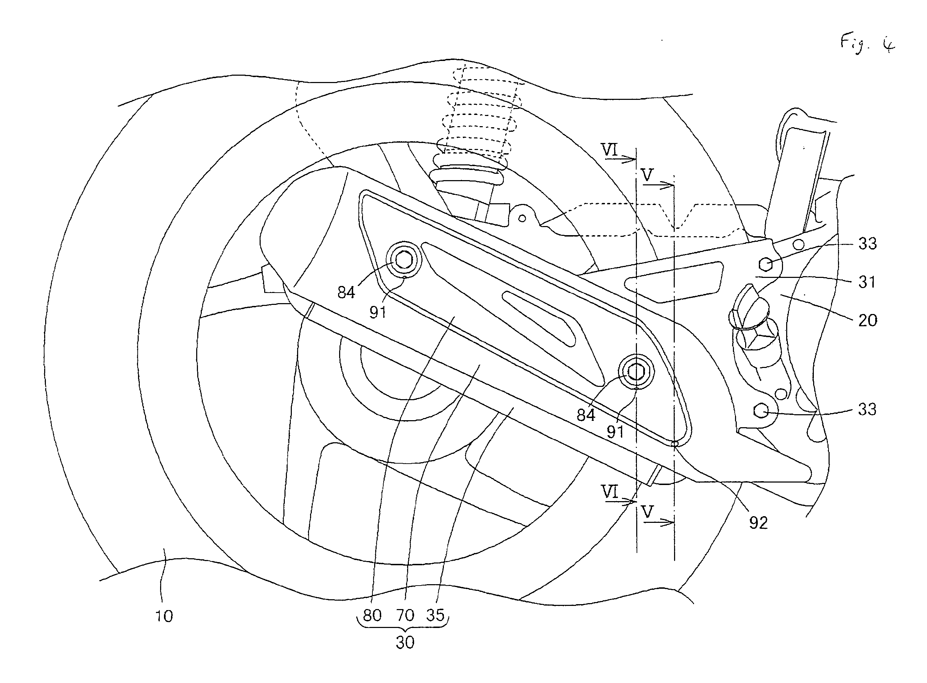

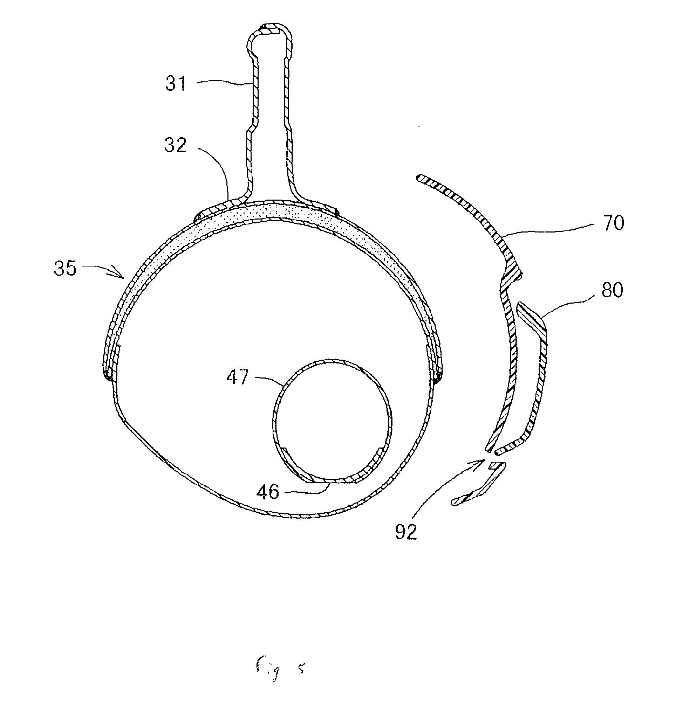

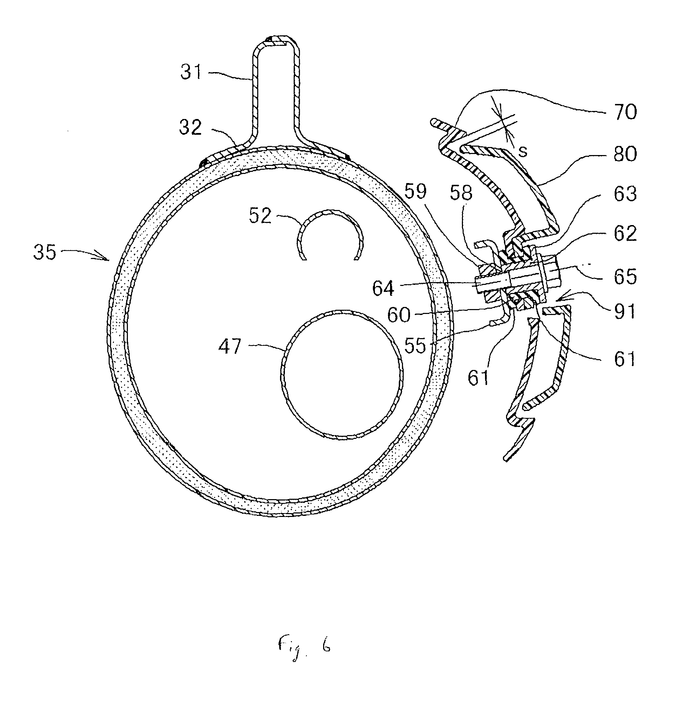

Fig. 4 is an enlarged view of the muffler unit 30 and its periphery in the rear portion of the vehicle shown in Fig. 1. Fig. 5 is a cross-sectional view taken of the muffler unit 30 and its periphery along the line V-V of Fig. 4. Fig. 6 is a cross-sectional view of the muffler unit 30 and its periphery taken along the line VI-VI of Fig. 4.

As shown in Figs. 5 and 6, the muffler supporting member 31 shown in Fig. 4 is formed of a pair of sheets of metal, and has a flange portion 32 in its lower portion. The flange portion 32 of the muffler supporting member 31 and the muffler body 35 are welded together at a contact portion. The muffler supporting member 31 and the rear portion of the crankcase 20 are connected to each other with connection bolts 33, as shown in Fig. 4.

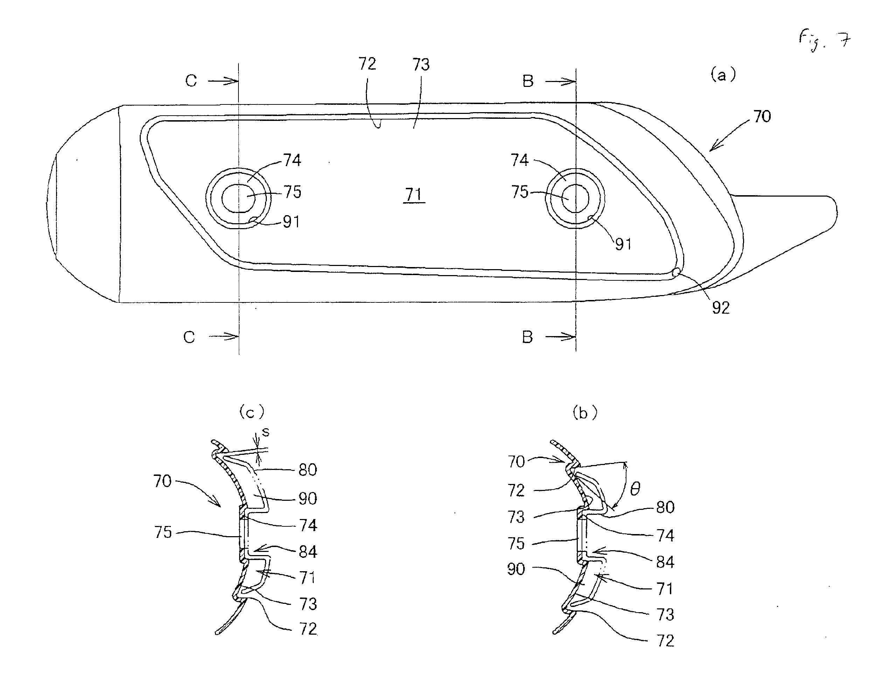

Figs. 7(a) to 7(c) are views of the first protector 70. Fig. 7(a) is a right side view of the first protector 70; Fig. 7(b) is a cross-sectional view of the first protector 70 taken along the line B-B of Fig. 7(a); and Fig. 7(c) is a cross-sectional view taken along the line C-C of Fig. 7(a).

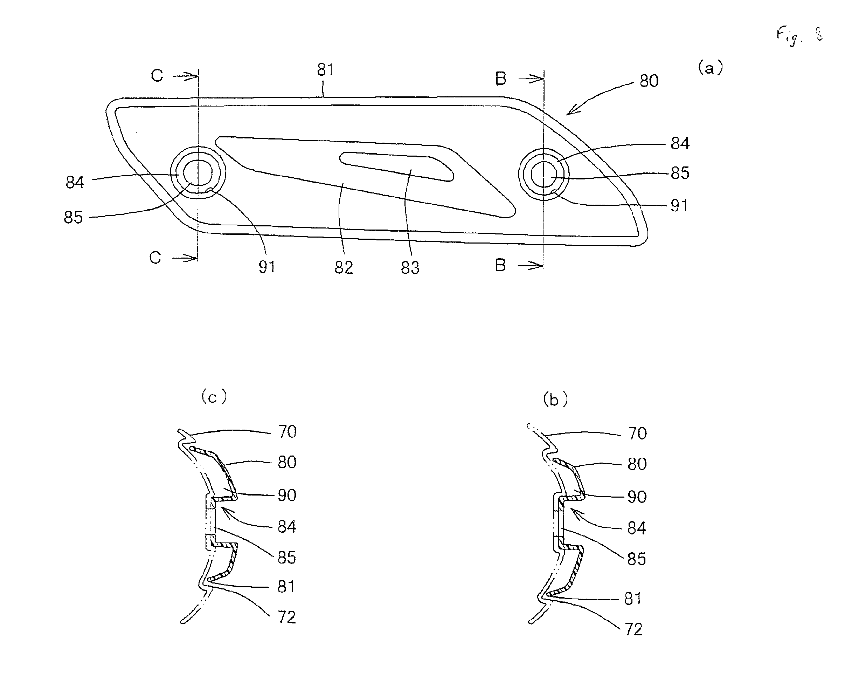

Figs. 8(a) to 8(c) are views of the second protector 80. Fig. 8(a) is a right side view of the second protector 80; Fig. 8(b) is a cross-sectional view of the second protector 80 taken along the line B-B of Fig. 8(a); and Fig. 8(c) is a cross-sectional view of the second protector 80 taken along the line C-C of Fig. 8(a).

Both the first and second protectors 70, 80 are formed from members made of resin. Hereinafter, the surfaces of the members are distinguished from each other by referring to the surface which is further from the muffler body 35 as an "outer surface", and referring to the surface which is closer to the muffler body 35 as an "inner surface". Fig. 7(a) and Fig. 8(a) show the outer surfaces of the protectors.

In Figs. 7(a) to 7(c), a large-area recessed portion 71 which is longitudinally elongated when seen from the outside is provided at a central portion of the first protector 70. This recessed portion 71 is hereinafter called a first recessed portion 71. This recessed portion is used to surround and house the second protector 80 with an interval (s) in between. Shallow recessed portions 74 whose base area is small are provided at both front and rear portions of the first recessed portion 71. These recessed portions 74 are hereinafter called second recessed portions 74. A fastening hole 75 is provided at the centre of each second recessed portion 74. The front fastening hole 75 is in the form of a true circle, whereas the rear fastening hole 75 is not a true circle but is instead in the form of an elongated hole extending in the longitudinal direction of the first protector 70.

In Figs. 8(a) to 8(c), a recessed portion 82 is provided at a central portion of the second protector 80, and a hole 83 is provided in the recessed portion 82. The hole 83 is a hole for air circulation, and has an effect of reducing an increase in the temperature of the second protector 80 and its inner space. Deeper recessed portions 84 whose base area is small are provided in front of and behind the recessed portion 82 in the longitudinal direction. These recessed portions are hereinafter called third recessed portions 84. A fastening hole 85 is provided at the centre of each third recessed portion 84. The front fastening hole 85 is in the form of a true circle, whereas the rear fastening hole 85 is not a true circle but is instead in the form of an elongated hole extending in the longitudinal direction of the second protector 80.

The second protector 80 is a member fitted in the first recessed portion 71 of the first protector 70. As shown in Figs. 7(b) and 7(c) and Figs. 8(b) and 8(c), the second protector 80 is fitted in the first recessed portion 71 of the first protector 70, with a small interval (s) maintained between an inner peripheral wall 72 of the first recessed portion 71 of the first protector 70 and an outer peripheral edge 81 of the second protector 80. The second protector 80 is located within the first recessed portion 71 of the first protector 70, and a tip portion of the outer peripheral edge 81 of the second protector 80 is located nearer to a bottom wall 73 of the first recessed portion 71 than an apex portion of the inner peripheral wall of the first protector 70. This makes rainwater and dust less likely to enter through the gap of the interval (s). The second protector 80 is disposed in such a way that the inner peripheral wall 72 and the bottom wall 73 of the first recessed portion 71 of the first protector 70 surrounding the second protector 80 are not in contact with the outer peripheral edge 81 of the second protector 80. This makes it possible to absorb any dimensional error of the first and second protectors 70 and 80, as well as to improve the efficiency of discharging rainwater and dust which may enter the gap between the first and second protectors 70, 80 from the outside. This also makes the first recessed portion 71 of the first protector 70 and the outer peripheral edge 81 of the second protector 80 less likely to interfere with each other when the internal combustion engine vibrates, for example.

As shown in Figs. 7(b) and 7(c) and Figs. 8(b) and 8(c), the second protector 80 is disposed in such a manner that a heat insulation space 90 is formed between the outer surface of the first protector 70 and the inner surface of the second protector 80 which faces this outer surface. Thereby, the heat-shielding effect can be enhanced.

As shown in Figs. 7(b) and 7(c), the first protector 70 is formed along an outer peripheral surface of the cylindrical muffler body 35, and hence is curved in generally the same shape as the outer peripheral surface of the muffler body 35. In particular, the bottom wall 73 of the first recessed portion 71 of the first protector 70 curves in the above way. The inner peripheral wall 72 of the first recessed portion 71 of the first protector 70 is formed such that an angle θ formed between each of upper and lower parts of the inner peripheral wall 72 and the bottom wall 73 of the recessed portion 71 is an acute angle. In Figs. 7(a) to 7(c), the angle θ is only shown in one of the corresponding portions of Fig. 7(b) and is not shown in the other portion; however, all of the angles θ formed between the upper and lower parts of the inner peripheral wall 72 and the bottom wall 73 of the first recessed portion 71 of the first protector 70 are acute angles. This clarifies the positional relation between the first and second protectors 70, 80, and makes it easier to keep the positional relation.

As shown in Figs. 7(b) and 7(c) and Figs. 8(b) and 8(c), the second recessed portions 74 are formed around the fastening holes 75 of the first protector 70 respectively, and the third recessed portions 84, which are to be fitted into the second recessed portions 74, are formed around the fastening holes 85 of the second protector 80 respectively. A surface of the bottom of each third recessed portion 84 of the second protector 80 is brought in contact with the bottom of the corresponding second recessed portion 74 of the first protector. In this state, the fastening holes of the respective protectors overlap each other. This makes it easier to keep the positional relation between the first and second protectors 70, 80.

As shown in Fig. 4, Fig. 7(a), and Fig. 8(a), water drainage holes 91 are formed in lower parts of the second recessed portions 74 surrounding the fastening holes 75 of the first protector 70 and lower parts of the third recessed portions 84 surrounding the fastening holes 85 of the second protector 80, respectively (see also Fig. 6) with the muffler unit 30 attached to the vehicle. This makes it possible to make rainwater, dust, and the like less likely to accumulate in these portions, to improve the efficiency of discharging these, as well as to keep the appearance in a good condition. Note that it is sufficient to provide the water drainage hole 91 in a vicinity of a lower part of at least the second recessed portion 74 of the first protector 70 and the third recessed portion 84 of the second protector 80, as long as the vicinity includes an area that is located at a lowermost position in a state where the muffler unit 30 is attached to a vehicle.

As shown in Fig. 4 and Fig. 7(a), a water drainage hole 92 is formed in the lowermost portion of the first recessed portion 71 of the first protector 70 with the muffler unit 30 attached to the vehicle (see also Fig. 5). This makes it possible to make rainwater and dust less likely to accumulate in the first recessed portion 71 of the first protector 70 and to improve the efficiency of discharging these. Note that it is sufficient to provide the water drainage hole 92 in the vicinity of the lowermost part of the first recessed portion 71 of the first protector 70.

In the case where the second protector 80 is made of a light-transmissive resin member, colouring paint may be applied only to an inner surface of the second protector 80 facing an outer surface of the first protector 70. As colouring paint is not applied to a surface of the second protector 80 which is exposed to the outside, it is possible to protect the painted surface of the second protector 80 against damage from external factors such as bounced stones, and thus to keep the appearance in a good condition. Further, because the heat insulation space 90 is formed between the inner surface of the second protector 80 to which colouring paint is applied and the outer surface of the first protector 70, it is possible to keep the painted surface away from an influence of heat from the muffler body 35, and thus to reduce the deterioration of the paint.

Fig. 6 shows a method of attaching the protectors 70, 80. The fastening holes 75, 85 (Figs. 7(a) to 7(c) and Figs. 8(a) to 8(c)) are formed in the first and second protectors 70, 80 to fasten the protectors together, and the first and second protectors 70, 80 are combined together by means of the grommets 60 inserted in the fastening holes 75, 85. Each grommet 60 is an elastic member having flange portions 61 at its two ends for clamping the first and second protectors 70, 80 (see also Fig. 2). This makes it possible to preassemble the first and second protectors 70, 80 into a unit, and thus simplifies the attachment of these protectors to the muffler body 35. Further, this makes it easy to keep the first and second protectors 70 and 80 in a predetermined positional relation when the two grommets 60 are mounted in the fastening holes 75, 85, thereby enabling easy attachment of the second grommet 60.

The metal collar 62 is inserted into a central hole of each grommet 60 from an outer surface of the grommet. The collar 62 has a flange portion 63 at one end of a tubular portion, and the flange portion 63 of the collar 62 is brought into contact with the corresponding one of the flange portions 61 of the grommet 60. In this state, the fastening bolt 64 is inserted into a central hole of the collar 62; while the first and second protectors 70, 80 are together brought in contact with the bracket 55, the fastening bolt 64 is inserted into the mount hole 58, and is screwed into and fastened with the weld nut 59. In Fig. 6, the positions of the fastening hole 58 and the weld nut 59 of the bracket 55 are set in such a manner that a centre line 65 of the fastening bolt 64 extends upward toward the outside. Because the centre line 65 of the fastening bolt 64 extends upward toward the outside, the work for attaching the protectors 70 and 80 is easy.

The front fastening holes 75, 85 of the protectors 70, 80 are in the form of a true circle, and can be easily matched to the front mount hole 58 of the bracket 55 in a usual operation. Meanwhile, the rear fastening holes 75, 85 of the protectors 70, 80 are in the form of elongate holes. Hence, even if the rear fastening holes 75, 85 of the protectors 70, 80 and the rear mount hole 58 of the bracket 55 are slightly longitudinally displaced from each other due to a manufacturing error when the rear fastening holes are fastened to the rear mount hole after fastening of the front fastening holes to the front mount hole, the elongated hole allows such displacement to be absorbed, and thus enables the protectors to be fastened together by use of the fastening bolt 64. The elongated hole also makes it easy to arrange the second protector 80 in a correct position in the first recessed portion 71 of the first protector 70. Note that either one of the front and rear fastening holes may be an elongated hole, as long as the other fastening hole is a true circle.

When the first and second protectors 70, 80 are attached, the protectors 70, 80 are first fastened (while the second protector 80 is housed in and positioned to the first protector 70) by use of the one of the fastening holes 75, 85 which is in the form of a true circle, and are then fastened by use of the other one of the fastening holes 75, 85 which is in the form of an elongated hole to complete the fastening. Any dimensional error between the protectors 70, 80 can be absorbed by the fastening holes in the form of an elongated hole, and the positioning is carried out using the fastening holes in the form of a true circle. This enables the second protector 80 to be housed in the first protector 70 well while the protectors 70, 80 are attached to the muffler body 35, and thus enables an improvement of the appearance quality.

The first and second protectors 70, 80 are attached and fastened together to the muffler body 35 with the bracket 55 in between. This enables a reduction in the number of components, and also makes it easy to keep the first and second protectors 70, 80 in their predetermined positions when they are fastened together. Accordingly, the workability for attaching the protectors 70, 80 to the muffler body 35 can be improved.

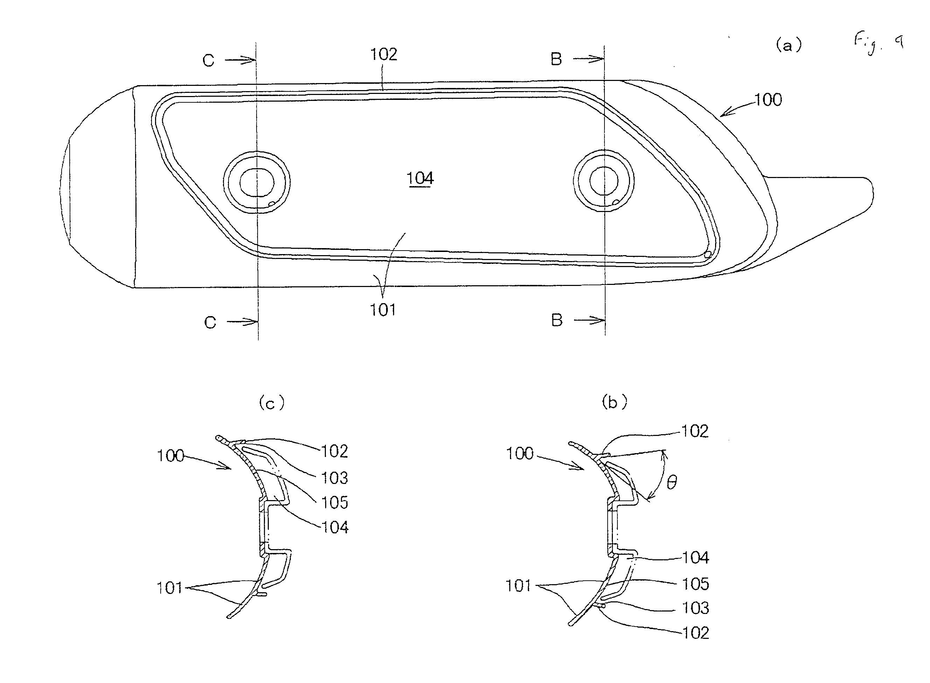

Figs. 9(a) to 9(c) are views of a first protector of a second embodiment. Fig. 9(a) is a right side view of a first protector 100 of the second embodiment. Fig. 9(b) is a cross-sectional view of the first protector 100 taken along the line B-B of Fig. 9(a), and Fig. 9(c) is a cross-sectional view of the first protector 100 taken along the line C-C of Fig. 9(a).

In this second embodiment, a board portion 101 of the first protector 100 curves along an outer surface of a muffler body 35, and a wall body 102 protrudes from the board portion 101 at a position surrounding a second protector 80. The inside of the wall body 102 constitutes a large recessed portion 104 to house the second protector 80. The wall body 102 is formed such that an angle θ formed between each of upper and lower parts of an inner peripheral wall 103 of the wall body 102 and the bottom wall 105 of the recessed portion 104 (that is, the board portion 101) is an acute angle. The configuration and effect are the same as the configuration and effect of the first protector 70 of the first embodiment as shown in Figs. 7(a) to 7(c), except for the formation of the wall body 102.

## Claims

1. A muffler unit (30) for a saddle-ride type vehicle, the muffler unit (30) including:
a first protector (70) which is a heat insulation protector to be applied to a muffler body (35) connected to an exhaust pipe (23) extending from an internal combustion engine (8) to cover an outer surface of the muffler body (35); and
a second protector (80) which is disposed on an outer surface of the first protector (70), the first protector (70) and the second protector (80) being attached and fastened together to the muffler body (35),
**characterized in that**
the first protector (70) is formed larger than the second protector (80), and has a first recessed portion (71) completely surrounding the second protector (80) around the outer peripheral edge (81) of the second protector (80), and
in a state where the first protector (70) and the second protector (80) are attached to the muffler body (35), the second protector (80) is disposed such that the outer peripheral edge (81) of the second protector (80) is located in the first recessed portion (71) while being adjacent to an inner peripheral wall (72) of the first recessed portion (71) and spaced therefrom by a predetermined interval.

2. The muffler unit (30) for a saddle-ride type vehicle according to claim 1, wherein:
fastening holes (75, 85) for fastening the protectors together to the muffler body (35) are formed in the first and second protectors (70, 80),
the first and second protectors (70, 80) are attached to the muffler body (35) by means of an elastic member (60) inserted in the fastening holes (75, 85), and
a flange portion (61) for clamping the first and second protectors (70, 80) is formed on the elastic member (60).

3. The muffler unit (30) for a saddle-ride type vehicle according to claim 1 or 2, wherein the second protector (80) is disposed in such a manner that a space (90) is formed between the outer surface of the first protector (70) covering the outer surface of the muffler body (35) and an inner surface of the second protector (80) facing the outer surface of the first protector (70).

4. The muffler unit (30) for a saddle-ride type vehicle according to any one of claims 1 to 3, wherein
the protectors (70, 80) are formed along an outer peripheral surface of the muffler body (35), and
the first recessed portion (71) of the first protector (70) is formed in such a manner that an angle (θ) formed between each of upper and lower parts of an inner peripheral wall (72) of the first recessed portion (71) and a bottom wall (73) of the first recessed portion (71) is an acute angle.

5. The muffler unit (30) for a saddle-ride type vehicle according to any one of claims 2 to 4, wherein
a second recessed portion (74) is formed around the fastening hole (75) of the first protector (70), the second recessed portion (74) being further recessed from the bottom wall (73) of the first recessed portion (71), and
a third recessed portion (84) is formed around the fastening hole (85) of the second protector (80), the third recessed portion (84) overlapping and being fitted in the second recessed portion (74).

6. The muffler unit (30) for a saddle-ride type vehicle according to claim 5, wherein a water drainage hole (91) is formed in a vicinity of a lower part of at least the second recessed portion (74) of the first protector (70) and the third recessed portion (84) of the second protector (80), the vicinity including an area that is located at a lowermost position in a state where the muffler unit (30) is attached to a vehicle.

7. The muffler unit (30) for a saddle-ride type vehicle according to any preceding claim, wherein a water drainage hole (92) is formed in a vicinity of a lower part of the first recessed portion (71) of the first protector (70) surrounding the second protector (80), the vicinity including an area that is located at a lowermost position in a state where the muffler unit (30) is attached to a vehicle.

8. The muffler unit (30) for a saddle-ride type vehicle according to claim 2 or any claim dependent thereon, wherein
the first protector (70) and the second protector (80) are resin members,
the fastening holes (75, 85) are formed in the protectors (70, 80) at front and rear ends thereof, and
the fastening holes (75, 85) on at least one of the front and rear sides are formed in the shape of an elongated hole.

9. The muffler unit (30) for a saddle-ride type vehicle according to claim 8, wherein
the fastening holes (75, 85) are formed in the protectors (70, 80) at one position at each of front and rear ends thereof, and
the fastening holes (75, 85) on only one of the front and rear sides are formed in the shape of an elongated hole.

10. The muffler unit (30) for a saddle-ride type vehicle according to any preceding claim, wherein the second protector (80) is disposed such that the first recessed portion (71) of the first protector (70) surrounding the second protector (80) and the outer peripheral edge (81) of the second protector (80) are out of contact with each other.

11. The muffler unit (30) for a saddle-ride type vehicle according to claim 3 or any claim dependent thereon, wherein
the second protector (80) is made of a light-transmissive resin, and
colouring paint is applied only to the inner surface of the second protector (80) facing the outer surface of the first protector (70).

12. The muffler unit (30) for a saddle-ride type vehicle according to any preceding claim, wherein
the muffler body (35) comprises:
partition walls (43, 44) which partition the inside of the muffler body (35) into a plurality of expansion chambers;
an introduction pipe (45) and communication pipes (52, 53) which are supported by the partition walls (43, 44) and connected to the exhaust pipe (23); and
a protector mount bracket (55) which is welded to the outer surface of the muffler body (35),
a welded portion (57) of the protector mount bracket (55) is located at a position spaced from the partition walls (43, 44) in a longitudinal direction, the welded portion (57) being welded to the muffler body (35), and
a position (58) where the protectors (70, 80) are fastened is located at a position spaced from the welded portion (57) in the longitudinal direction.

## Patentansprüche

1. Schalldämpfereinheit (30) für ein Fahrzeug mit einem Sattel, wobei die Schalldämpfereinheit (30) Folgendes aufweist:
eine erste Schutzvorrichtung (70), die aus einer Wärmeisolierungsschutzvorrichtung besteht, die an einen Schalldämpferkörper (35) angelegt werden soll, der mit einem Auspuffrohr (23) verbunden ist, das sich von einem Verbrennungsmotor (8) aus erstreckt, um eine Außenfläche des Schalldämpferkörpers (35) zu bedecken; und
eine zweite Schutzvorrichtung (80), die an einer Außenfläche der ersten Schutzvorrichtung (70) angeordnet ist, wobei die erste Schutzvorrichtung (70) und die zweite Schutzvorrichtung (80) zusammen an dem Schalldämpferkörper (35) angebracht und befestigt sind,
**dadurch gekennzeichnet, dass**
die erste Schutzvorrichtung (70) größer ausgebildet ist als die zweite Schutzvorrichtung (80), und einen ersten eingelassenen Abschnitt (71) aufweist, der die zweite Schutzvorrichtung (80) vollständig um die äußere Umfangskante (81) der zweiten Schutzvorrichtung (80) herum umgibt, und
in einem Zustand, in welchem die erste Schutzvorrichtung (70) und die zweite Schutzvorrichtung (80) an dem Schalldämpferkörper (35) montiert sind, ist die zweite Schutzvorrichtung (80) dergestalt angeordnet, dass die äußere Umfangskante (81) der zweiten Schutzvorrichtung (80) in dem ersten eingelassenen Abschnitt (71) liegt, während sie einer inneren Umfangswand (72) des ersten eingelassenen Abschnitts (71) benachbart und davon um einen vorbestimmten Abstand beabstandet ist.

2. Schalldämpfereinheit (30) für ein Fahrzeug mit einem Sattel nach Anspruch 1, wobei:
Befestigungsöffnungen (75, 85) zum gemeinsamen Befestigen der Schutzvorrichtungen an dem Schalldämpferkörper (35) in der ersten und zweiten Schutzvorrichtung (70, 80) ausgebildet sind,
die erste und zweite Schutzvorrichtung (70, 80) an dem Schalldämpferkörper (35) mittels eines elastischen Elements (60) angebracht sind, das in die Befestigungsöffnungen (75, 85) eingeführt wird, und
ein Flanschabschnitt (61) zum Einklemmen der ersten und zweiten Schutzvorrichtung (70, 80) an dem elastischen Element (60) ausgebildet ist.

3. Schalldämpfereinheit (30) für ein Fahrzeug mit einem Sattel nach Anspruch 1 oder 2, wobei die zweite Schutzvorrichtung (80) dergestalt angeordnet ist, dass ein Raum (90) zwischen der Außenfläche der ersten Schutzvorrichtung (70), welche die Außenfläche des Schalldämpferkörpers (35) bedeckt, und einer Innenfläche der zweiten Schutzvorrichtung (80) ausgebildet wird, die der Außenfläche der ersten Schutzvorrichtung (70) gegenüberliegt.

4. Schalldämpfereinheit (30) für ein Fahrzeug mit einem Sattel nach irgendeinem der Ansprüche 1 bis 3, wobei
die Schutzvorrichtungen (70, 80) entlang einer äußeren Umfangsfläche des Schalldämpferkörpers (35) ausgebildet sind, und
der erste eingelassene Abschnitt (71) der ersten Schutzvorrichtung (70) dergestalt ausgebildet ist, dass ein Winkel (θ), der zwischen jedem eines oberen und eines unteren Teils einer inneren Umfangswand (72) des ersten eingelassenen Abschnitts (71) und einer Bodenwand (73) des ersten eingelassenen Abschnitts (71) ausgebildet wird, ein spitzer Winkel ist.

5. Schalldämpfereinheit (30) für ein Fahrzeug mit einem Sattel nach irgendeinem der Ansprüche 2 bis 4, wobei
ein zweiter eingelassener Abschnitt (74) um die Befestigungsöffnung (75) herum der ersten Schutzvorrichtung (70) ausgebildet ist, wobei der zweite eingelassene Abschnitt (74) tiefer von der Bodenwand (73) des ersten eingelassenen Abschnitts (71) eingelassen ist, und
ein dritter eingelassener Abschnitt (84) um die Befestigungsöffnung (85) herum der zweiten Schutzvorrichtung (80) ausgebildet ist, wobei der dritte eingelassene Abschnitt (84) den zweiten eingelassenen Abschnitt (74) überlappt und in ihn eingepasst ist.

6. Schalldämpfereinheit (30) für ein Fahrzeug mit einem Sattel nach Anspruch 5, wobei eine Wasserablassöffnung (91) in einer Nähe eines unteren Teils mindestens des zweiten eingelassenen Abschnitts (74) der ersten Schutzvorrichtung (70) und des dritten eingelassenen Abschnitts (84) der zweiten Schutzvorrichtung (80) ausgebildet ist, wobei die Nähe einen Bereich aufweist, der an einer tiefsten Stelle in einem Zustand liegt, in welchem die Schalldämpfereinheit (30) an ein Fahrzeug angebracht ist.

7. Schalldämpfereinheit (30) für ein Fahrzeug mit einem Sattel nach deinem der vorhergehenden Ansprüche, wobei eine Wasserablassöffnung (92) in einer Nähe eines unteren Teils des ersten eingelassenen Abschnitts (71) der ersten Schutzvorrichtung (70) ausgebildet ist, welche die zweite Schutzvorrichtung (80) umgibt, wobei die Nähe einen Bereich aufweist, der an einer tiefsten Stelle in einem Zustand liegt, in welchem die Schalldämpfereinheit (30) an ein Fahrzeug angebracht ist.

8. Schalldämpfereinheit (30) für ein Fahrzeug mit einem Sattel nach Anspruch 2 oder einem Anspruch, der davon abhängt, wobei
die erste Schutzvorrichtung (70) und die zweite Schutzvorrichtung (80) aus Harzelementen bestehen,
die Befestigungsöffnungen (75, 85) in den Schutzvorrichtungen (70, 80) an deren vorderen und hinteren Enden ausgebildet sind, und
die Befestigungsöffnungen (75, 85) an mindestens einer der vorderen und hinteren Seiten in der Form einer länglichen Öffnung ausgebildet sind.

9. Schalldämpfereinheit (30) für ein Fahrzeug mit einem Sattel nach Anspruch 8, wobei
die Befestigungsöffnungen (75, 85) in den Schutzvorrichtungen (70, 80) an einer Stelle an jedem der vorderen und hinteren Enden davon ausgebildet sind, und
die Befestigungsöffnungen (75, 85) nur an einer der vorderen und hinteren Seite in der Form einer länglichen Öffnung ausgebildet sind.

10. Schalldämpfereinheit (30) für ein Fahrzeug mit einem Sattel nach einem vorhergehenden Anspruch, wobei die zweite Schutzvorrichtung (80) dergestalt angeordnet ist, dass der erste eingelassene Abschnitt (71) der ersten Schutzvorrichtung (70), welche die zweite Schutzvorrichtung (80) und die äußere Umfangskante (81) der zweiten Schutzvorrichtung (80) umgibt, nicht miteinander in Kontakt stehen.

11. Schalldämpfereinheit (30) für ein Fahrzeug mit einem Sattel nach Anspruch 3 oder einem Anspruch, der davon abhängt, wobei
die zweite Schutzvorrichtung (80) aus einem lichtdurchlässigen Harz hergestellt ist, und Farbe nur auf die Innenfläche der zweiten Schutzvorrichtung (80), die der Außenfläche der ersten Schutzvorrichtung (70) gegenüberliegt, aufgetragen ist.

12. Schalldämpfereinheit (30) für ein Fahrzeug mit einem Sattel nach einem vorhergehenden Anspruch, wobei der Schalldämpferkörper (35) Folgendes umfasst:
Trennwände (43, 44), welche das Innere des Schalldämpferkörpers (35) in eine Vielzahl von Druckausgleichskammern unterteilen;
ein Einleitungsrohr (45) und kommunizierende Rohre (52, 53), die von den Trennwänden (43, 44) getragen werden und mit dem Auspuffrohr (23) verbunden sind; und
einen Schutzvorrichtung-Montagebügel (55), der an die Außenfläche des Schalldämpferkörpers (35) angeschweißt ist,
einen geschweißter Abschnitt (57) des Schutzvorrichtung-Montagebügels (55), der an einer Stelle liegt, die von den Trennwänden (43, 44) in eine Längsrichtung entfernt ist, wobei der geschweißte Abschnitt (57) an den Schalldämpferkörper (35) angeschweißt ist, und
eine Stelle (58), an welcher die Schutzvorrichtungen (70, 80) befestigt sind, die an einer Stelle liegt, die von dem geschweißten Abschnitt (57) in eine Längsrichtung entfernt beabstandet ist.

## Revendications

1. Unité d'échappement (30) pour un véhicule de type à selle, l'unité d'échappement (30) incluant :
un premier protecteur (70) qui est un protecteur d'isolation thermique à appliquer sur un corps d'échappement (35) relié à une conduite d'échappement (23) s'étendant depuis un moteur à combustion interne (8) pour recouvrir une surface extérieure du corps d'échappement (35) ; et
un second protecteur (80) qui est agencé sur une surface extérieure du premier protecteur (70), le premier protecteur (70) et le second protecteur (80) étant attachés et fixés ensemble au corps d'échappement (35),
**caractérisée en ce que**
le premier protecteur (70) est formé de manière plus grande que le second protecteur (80) et présente une première partie évidée (71) entourant complètement le second protecteur (80) autour de l'arête périphérique extérieure (81) du second protecteur (80), et
dans un état où le premier protecteur (70) et le second protecteur (80) sont attachés au corps d'échappement (35), le second protecteur (80) est agencé de sorte que l'arête périphérique extérieure (81) du second protecteur (80) soit située dans la première partie évidée (71) tout en étant adjacente à une paroi périphérique intérieure (72) de la première partie évidée (71) et espacée de celle-ci d'un intervalle prédéterminé.

2. Unité d'échappement (30) pour un véhicule de type selle selon la revendication 1, dans laquelle :
des trous de fixation (75, 85) pour la fixation des protecteurs ensemble au corps d'échappement (35) sont formés dans les premier et second protecteurs (70, 80),
les premier et second protecteurs (70, 80) sont attachés au corps d'échappement (35) à l'aide d'un élément élastique (60) inséré dans les trous de fixation (75, 85), et
une partie de bride (61) pour le serrage des premier et second protecteurs (70, 80) est formée sur l'élément élastique (60).

3. Unité d'échappement (30) pour un véhicule de type selle selon la revendication 1 ou 2, dans laquelle le second protecteur (80) est agencé de telle manière qu'un espace (90) soit formé entre la surface extérieure du premier protecteur (70) recouvrant la surface extérieure du corps d'échappement (35) et une surface intérieure du second protecteur (80) faisant face à la surface extérieure du premier protecteur (70).

4. Unité d'échappement (30) pour un véhicule de type selle selon l'une quelconque des revendications 1 à 3, dans laquelle
les protecteurs (70, 80) sont formés le long d'une surface périphérique extérieure du corps d'échappement (35), et
la première partie évidée (71) du premier protecteur (70) est formée de telle manière qu'un angle (θ) formé entre chacune des parties supérieure et inférieure d'une paroi périphérique intérieure (72) de la première partie évidée (71) et une paroi inférieure (73) de la première partie évidée (71) soit un angle aigu.

5. Unité d'échappement (30) pour un véhicule de type selle selon l'une quelconque des revendications 2 à 4, dans laquelle
une deuxième partie évidée (74) est formée autour du trou de fixation (75) du premier protecteur (70), la deuxième partie évidée (74) étant en outre évidée de la paroi inférieure (73) de la première partie évidée (71), et
une troisième partie évidée (84) est formée autour du trou de fixation (85) du second protecteur (80), la troisième partie évidée (84) recouvrant et étant insérée dans la deuxième partie évidée (74).

6. Unité d'échappement (30) pour un véhicule de type selle selon la revendication 5, dans laquelle un trou de drainage d'eau (91) est formé à proximité d'une partie inférieure d'au moins la deuxième partie évidée (74) du premier protecteur (70) et de la troisième partie évidée (84) du second protecteur (80), la proximité incluant une zone qui est située sur une position la plus basse dans un état, où l'unité d'échappement (30) est attachée à un véhicule.

7. Unité d'échappement (30) pour un véhicule de type selle selon l'une quelconque des revendications précédentes, dans laquelle un trou de drainage d'eau (92) est formé à proximité d'une partie inférieure de la première partie évidée (71) du premier protecteur (70) entourant le second protecteur (80), la proximité incluant une zone qui est située sur une position la plus basse dans un état où l'unité d'échappement (30) est attachée à un véhicule.

8. Unité d'échappement (30) pour un véhicule de type selle selon la revendication 2 ou l'une quelconque des revendications dépendant de celle-ci, dans laquelle
le premier protecteur (70) et le second protecteur (80) sont des éléments en résine,
les trous de fixation (75, 85) sont formés dans les protecteurs (70, 80) sur des extrémités avant et arrière de ceux-ci et
les trous de fixation (75, 85) sur au moins l'un des côtés avant et arrière sont formés comme un trou allongé.

9. Unité d'échappement (30) pour un véhicule de type selle selon la revendication 8, dans laquelle
les trous de fixation (75, 85) sont formés dans les protecteurs (70, 80) sur une position sur chacune des extrémités avant et arrière de ceux-ci, et
les trous de fixation (75, 85) sur un seul côté des côtés avant et arrière sont formés comme un trou allongé.

10. Unité d'échappement (30) pour un véhicule de type selle selon l'une quelconque des revendications précédentes, dans laquelle le second protecteur (80) est agencé de sorte que la première partie évidée (71) du premier protecteur (70) entourant le second protecteur (80) et l'arête périphérique extérieure (81) du second protecteur (80) soient hors de contact l'une avec l'autre.

11. Unité d'échappement (30) pour un véhicule de type selle selon la revendication 3 ou l'une quelconque des revendications dépendant de celle-ci, dans laquelle
le second protecteur (80) est fabriqué en une résine translucide, et
de la peinture colorante est appliquée seulement sur la surface intérieure du second protecteur (80) faisant face à la surface extérieure du premier protecteur (70).

12. Unité d'échappement (30) pour un véhicule de type selle selon l'une quelconque des revendications précédentes, dans laquelle
le corps d'échappement (35) comprend :
des parois de séparation (43, 44) qui séparent l'intérieur du corps d'échappement (35) en une pluralité de chambres d'expansion ;
une conduite d'introduction (45) et des conduites de communication (52, 53) qui sont supportées par les parois de séparation (43, 44) et reliées à la conduite d'échappement (23) ; et
un support de fixation de protecteur (55) qui est soudé à la surface extérieure du corps d'échappement (35),
une partie soudée (57) du support de fixation de protecteur (55) est située sur une position espacée des parois de séparation (43, 44) dans une direction longitudinale, la partie soudée (57) étant soudée au corps d'échappement (35), et
une position (58) où les protecteurs (70, 80) sont fixés, est située sur une position espacée de la partie soudée (57) dans la direction longitudinale.
